(19) Europäisches Patentamt
European Patent Office
Office européen des brevets

(11) EP 2 573 137 B1

# (12) EUROPEAN PATENT SPECIFICATION

(45) Date of publication and mention of the grant of the patent:
**30.08.2023 Bulletin 2023/35**

(21) Application number: **11783523.1**

(22) Date of filing: **16.05.2011**

(51) International Patent Classification (IPC):
***C08L 69/00*** (2006.01) ***C08J 5/18*** (2006.01)
***C08G 64/02*** (2006.01) ***B42D 25/00*** (2014.01)
***G06K 19/02*** (2006.01) ***G06K 19/07*** (2006.01)
***G06K 19/06*** (2006.01)

(52) Cooperative Patent Classification (CPC):
**C08G 64/0208; B42D 25/00; C08J 5/18;**
B42D 2033/30; B42P 2241/28; C08J 2369/00

(86) International application number:
**PCT/JP2011/061251**

(87) International publication number:
**WO 2011/145589 (24.11.2011 Gazette 2011/47)**

## (54) SHEET FOR CARDS AND CARD

FOLIE FÜR KARTEN UND KARTE

FEUILLE POUR CARTES ET CARTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2010 JP 2010115665**
**09.07.2010 JP 2010156831**

(43) Date of publication of application:
**27.03.2013 Bulletin 2013/13**

(73) Proprietor: **Mitsubishi Chemical Corporation**
**Tokyo 100-8251 (JP)**

(72) Inventors:
- **YOKOGI Masashi**
  **Fukuoka 806-0004 (JP)**
- **KITADE Taku**
  **Shiga (JP)**
- **NISHIKAWA Yoshiki**
  **Shiga (JP)**

(74) Representative: **Vossius & Partner**
**Patentanwälte Rechtsanwälte mbB**
**Siebertstrasse 3**
**81675 München (DE)**

(56) References cited:

| | |
|---|---|
| **EP-A1- 2 060 606** | **EP-A1- 2 543 509** |
| **EP-A1- 2 543 510** | **WO-A1-99/09102** |
| **WO-A1-2007/148604** | **JP-A- 2003 154 606** |
| **JP-A- 2003 154 606** | **JP-A- 2008 285 518** |
| **JP-A- 2009 161 746** | **JP-A- 2009 161 746** |
| **JP-B2- 3 628 256** | **US-A1- 2009 105 393** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a card produced using a sheet for cards that is of the environmentally friendly type for which a resin produced using a plant-derived starting material as a main ingredient (hereinafter, the resin is referred to also as "plant-derived resin") was used as a main raw material.

### Background Art

As the materials of plastic cards such as magnetic stripe cards and non-contact type IC cards, use has conventionally been made of poly(vinyl chloride) resins (hereinafter referred to as "PVC"). A magnetic stripe card is generally produced by superposing a transparent overlay sheet to which a magnetic tape has been temporarily adhered on a printed white core sheet, thermally fusion-bonding (hereinafter referred to as "laminating") the sheets to each other by means of a hot press, subsequently cutting the laminate into a card shape with a punching die, and finally putting characters thereon with an embosser (hereinafter referred to as "embossing"). In the case of non-contact type IC cards or the like, a technique is being used in which an inlet sheet equipped with an IC chip and an antenna is sandwiched between two core sheets and laminated thereto and an overlay sheet is laminated to each of the front and back surfaces of the core sheets to form a non-contact type IC card or the like. PVC sheets can be mass-produced by calendaring and are materials which are excellent in terms of printability, suitability for laminating, and embossability and which are suitable for use as cards.

Recently, there is a growing need for a sheet for cards which is made of a material other than PVC, due to the ecology boom of the times. For example, polystyrene-based and polyester-based materials have been proposed. However, various impact-resistant polystryrene and acrylonitrile/butadiene/styrene copolymers, which are non-PVC materials for cards, have had problems that when sheets thereof are punched into a card shape, the resultant cut surfaces have a large burr (hereinafter referred to as "punching burr") and that the card, through embossing, comes to have enhanced warpage (hereinafter referred to as "embossing curl").

Proposed as a polyester-based material, which is a non-PVC material for cards, is, for example, a sheet constituted of an amorphous polyester resin which is a product of the dehydrating condensation of terephthalic acid with ethylene glycol and cyclohexanedimethanol. This material is akin in processability into cards to PVC sheets and can be processed into cards using the same equipment as PVC sheets. This material hence is considered to be the most promising sheet material as a substitute for PVC. However, this material has had a problem that when being embossed under the same conditions as for PVC, the card comes to have a large embossing curl. A large embossing curl not only renders the card poor in appearance but also results in cases where it is difficult to insert the card into reader/writers. There has hence been a desire for a sheet which, even when being embossed under the same conditions as for PVC, comes to have a reduced embossing curl.

Patent document 1 discloses an overlay sheet for cards which is constituted of a composition that includes a substantially amorphous polyester resin as a main component and a polycarbonate resin, polyarylate resin, or mixture thereof which has been added thereto.

Patent document 2 discloses a sheet for cards which includes as a main component a substantially amorphous polyester resin obtained using 1,4-cyclohexanedimethanol in place of some of ethylene glycol as a constituent ingredient for poly(ethylene terephthalate) and which contains a platy inorganic filler and either poly(butylene terephthalate) or a copolymer thereof.

Meanwhile, the plastics used in various cards have been mostly subjected to incineration disposal. In recent years, after the decision of Kyoto Protocol as a turning-point, the time for reductions of carbon dioxide emission and for introduction of circulatory materials has become ripe. To diminish the incineration disposal of products produced from petroleum-derived raw materials and to reduce the consumption of petroleum, which is depletable resources, are important subjects for the future development of all products. In the field of production of information-recording cards also, one of the important subjects of development is to replace a petroleum-derived resin used as a raw material for producing cards with a recyclable substance.

Currently, the most noticeable expedient for accomplishing such subjects is to utilize plant-derived resins such as lactic acid polymers produced using, as a starting material, lactic acid obtained by fermenting starches obtained from plants. If such plant-derived resins are utilized increasingly, not only a contribution to a reduction in carbon dioxide emission is made but also use of depletable resources can be diminished and a considerable contribution to the recycling of resources can be made. Lactic acid polymers are excellent in terms of transparency, rigidity, etc. and can be industrially mass-produced because fermentation/synthesis techniques have already been established. Consequently, lactic acid polymers are attracting attention as materials usable as a substitute for poly(ethylene terephthalate) or poly(vinyl chloride). In the field of production of information-recording cards also, a proposal has been made to the effect that such a lactic

acid polymer is used as a raw material.

For example, patent document 3 discloses a biodegradable card which includes superposed layers including a core layer and an overlay layer, the core layer including, as a main component, a composition composed of poly(lactic acid) and a biodegradable aliphatic polyester having a glass transition temperature of 0°C or lower.

Patent document 4 discloses a composition for cards which includes a lactic acid polymer, an amorphous aromatic polyester resin, and a thermoplastic elastomer. A sheet for cards which is formed from the composition is also disclosed.

Meanwhile, for producing cards for use in applications where special heat resistance is required, such as ETC cards for mounting on vehicles and B-CAS cards for receiving digital terrestrial broadcasting, a method is being employed in which at least one layer of a sheet constituted of a thermoplastic resin having high heat resistance is used.

For example, patent document 5 discloses a sheet for cards which includes superposed layers including a layer constituted of a substantially amorphous aromatic polyester resin composition and a layer constituted of a highly heat-resistant thermoplastic resin having a composition including a polycarbonate resin. A card obtained using the sheet is also disclosed therein.

Patent document 6 discloses a resin composition for a card that comprises a substantially amorphous polyester-based resin as a main component. Moreover, disclosed is a card having an overlay sheet as an outermost layer and a core sheet as an inner layer, wherein the core sheet is made of a substantially amorphous polyester based resin. The overlay sheet can have a glass transition temperature of from 90 to 140 °, and preferably includes a polycarbonate resin.

Patent document 7 discloses a heat-resistant plastic card formed by laminating overlay sheets each by way of an adhesive layer on both sides of a card core comprising a mono-layered or multilayered structure, wherein the glass transition temperature of the synthetic resin of at least one layer of the card core and the overlay sheet is 80°C or higher, and the glass transition temperature of the adhesive layer is 50 to 120°C.

## Prior-Art Documents

### Patent Documents

Patent Document 1: JP-A-2002-36765
Patent Document 2: JP-A-2002-249652
Patent Document 3: JP-A-2000-141955
Patent Document 4: JP-A-2009-235172
Patent Document 5: JP-A-2009-40052
Patent Document 6: JP-B-3628256
Patent Document 7: JP-A-2003-154606

## Summary of the Invention

### Problems that the Invention is to Solve

However, in the case where the sheet for cards which is described in patent document 1 or patent document 2 is used to produce a card, this card is insufficient in heat resistance and weatherability although the card has enhanced rigidity and a reduced embossing curl. There has been room for improvement. Furthermore, in the sheets for cards described in patent document 1 and patent document 2, no plant-derived plastic is used at all.

As described in patent document 3 and patent document 4, many proposals have been made on the production of a card using a lactic acid polymer as a main raw material. However, overlay sheets, in particular, are required to have transparency and other properties which are difficult to attain when a lactic acid polymer is used as a main component, such as printability, bondability, fusion-bondability, and durability which enables the sheet to withstand character impartation by embossing. Because of this, for industrially producing a product on the basis of such current techniques, a core sheet is formed using a lactic acid polymer as a main raw material, whereas an overlay sheet must be formed using a resin which is in general use for overlay sheet formation, such as, for example, an aromatic polyester resin.

Furthermore, the only method currently employed for imparting heat resistance in the case of use in cards required to have special heat resistance is to use a composition including a heat-resistant resin, e.g., a polycarbonate resin, as described in patent document 5.

As described above, the prior-art techniques have failed to sufficiently heighten the proportion in which a plant-derived resin is used in card applications.

Accordingly, an object of the invention is to provide a sheet for cards which is excellent in terms of all of heat

resistance, weatherability, rigidity, punchability, and embossability and which employs a plant-derived resin, and to further provide a card. Means for Solving the Problems

The present inventors diligently made investigations. As a result, the inventors have found that the problems described above can be eliminated with a card :

as defined in the annexed claims, which is produced by using a sheet for cards which is formed from a resin composition including as a main component a polycarbonate resin that contains structural units derived from a specific dihydroxy
compound and has a glass transition temperature lower than 130°C.

The invention has been thus completed.
The present invention is defined in the annexed claims, and described in detail in the following.

Effects of the Invention

According to the invention, it is possible to provide a card using a sheet for cards which is excellent in terms of all of heat resistance, weatherability, rigidity, punchability, and embossability and which employs a plant-derived resin. Since the card in accordance with the invention is produced by using the sheet for cards, the sheet shall be referred to herein as the "sheet for cards of the invention".

Modes for Carrying Out the Invention

Embodiments of the invention are explained below.
In the invention, the expression "includes as a main component" means that the proportion of this ingredient in the composition is 50% by mass or higher, preferably 75% by mass or higher, even more preferably 90% by mass or higher (including 100% by mass).

<Polycarbonate Resin (A)>

As the polycarbonate resin (A) in the invention, use is made of a polycarbonate resin which contains structural units (a) derived from a dihydroxy compound represented by the following formula (1) and has a glass transition temperature lower than 130°C.

[Chem. 2]

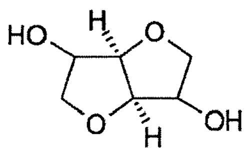

(1)

The dihydroxy compound represented by the formula (1) is an ether diol which can be produced from carbohydrates as a bio-derived starting material. Examples thereof include isosorbide, isomannide, and isoidide, which are stereoisomers. These compounds may be used alone or in combination of two or more thereof. Of these, isosorbide can be produced at low cost by hydrogenating D-glucose obtained from a starch and then dehydrating the hydrogenation product, and can be available as a starting material in large quantities. When these circumstances are taken into account, it is optimal to use isosorbide as a main constituent ingredient.
In a first embodiment of the sheet for cards of the invention, the polycarbonate resin (A) contains structural units (b) derived from a cyclohexanedimethanol as structural units other than the structural units (a). This embodiment is preferred from the standpoint of improving the impact resistance of the polycarbonate resin (A). In this embodiment, it is preferred that the proportion of the structural units (b) in all structural units in the polycarbonate resin (A) which each are derived from a dihydroxy compound should be 45-65% by mole. The lower limit of the proportion of the structural units (b) is more preferably 48% by mole or higher, even more preferably 50% by mole or higher. On the other hand, the upper limit of the proportion of the structural units (b) is more preferably 62% by mole or less, even more preferably 60% by mole or less. By regulating the proportion of the structural units (b) so as to be within that range, impact resistance sufficient for practical use and excellent interlaminar bondability which is required in card production can be imparted without impairing the heat resistance of the sheet for cards.

Incidentally, 1,4-cyclohexanedimethanol, which is easily available industrially, is preferred among the cyclohexanedimethanols.

It is preferred that the structural units in this polycarbonate resin (A) which each are derived from a dihydroxy compound should consist of the structural units (a) and the structural units (b). However, structural units derived from other dihydroxy compounds may be contained unless the effects of the invention are lessened by these structural units.

Examples of the dihydroxy compounds other than the dihydroxy compound represented by the formula (1) and the cyclohexanedimethanol include the aliphatic dihydroxy compounds shown in International Publication No. 2004/111106 and the alicyclic dihydroxy compounds shown in International Publication No. 2007/148604.

With respect to aliphatic dihydroxy compounds, it is preferred to select one or more compounds from ethylene glycol, 1,3-propanediol, 1,4-butanediol, 1,5-pentanediol, and 1,6-hexanediol. By copolymerizing these compounds, flexibility and impact resistance can be imparted to the polycarbonate resin (A). Furthermore, the copolymerization has an advantage that since it is easy to change heat resistance temperature, it is easy to regulate processing conditions to be used when the sheet is thermally fusion-bonded to a sheet of another kind or is embossed.

With respect to alicyclic dihydroxy compounds, it is preferred that the compounds should contain a 5-membered cyclic structure or a 6-membered cyclic structure. The 6-membered cyclic structure may have been fixed, by means of covalent bonding, so as to be in a chair form or a boat form. When an alicyclic dihydroxy compound having a 5-membered cyclic structure or 6-membered cyclic structure is used, flexibility and impact resistance are imparted to the polycarbonate to be obtained and, despite this, there is no possibility of excessively lowering the heat resistance temperature. Consequently, such alicyclic dihydroxy compound is suitable for designing products which are mainly required to have heat resistance. The number of carbon atoms contained in the alicyclic dihydroxy compound is generally 70 or less, preferably 50 or less, more preferably 30 or less.

Examples of the alicyclic dihydroxy compound containing a 5-membered cyclic structure or 6-membered cyclic structure include the alicyclic dihydroxy compounds shown in International Publication No. 2007/148604, which was cited above. Preferred examples among these are tricyclodecanedimethanol, adamantanediol, and pentacyclopentadecanedimethanol. From the standpoints of profitability, heat resistance, etc., tricyclodecanedimethanol is most preferred of these. These compounds may be used alone or in combination of two or more thereof.

The invention does not exclude partial copolymerization of aromatic dihydroxy compounds represented, for example, by bisphenol A and the like. In general, incorporation of these ingredients can efficiently heighten heat resistance and rigidity.

Meanwhile, in a second embodiment of the sheet for cards of the invention, the proportion of the structural units (a) in all structural units in the polycarbonate resin (A) which each are derived from a dihydroxy compound is preferably 80% by mole or higher, more preferably 85% by mole or higher, especially preferably 90% by mole or higher. When the proportion thereof is within that range, not only the proportion of the plant-derived starting material is further heightened but also this polycarbonate resin (A) has excellent heat resistance and satisfies other various properties required. Consequently, this polycarbonate resin (A) is suitable for use in the sheet for cards of the invention.

On the other hand, it is necessary that the glass transition temperature of the polycarbonate resin (A) should be regulated, by means of the comonomer ingredient which will be described later, so as to be within a range suitable for producing the card of the invention. Because of this, the proportion of the structural units (a) is preferably 99% by mole or less, more preferably 98% by mole or less, especially preferably 97% by mole or less.

It is preferred that the polycarbonate resin (A) should further contain structural units (c) derived from a polyalkylene glycol having a mass-average molecular weight of 1,000 or less, in a proportion of 1-20% by mole based on all structural units each derived from a dihydroxy compound.

Examples of the polyalkylene glycol include polyethylene glycol, polypropylene glycol, polytrimethylene glycol, polytetramethylene glycol, polyhexamethylene glycol, polybutylene glycol, polypentylene glycol, polyhexylene glycol, and block or random copolymers of ethylene oxide and propylene oxide. Especially preferred of these is polyethylene glycol.

The mass-average molecular weight of the polyalkylene glycol is preferably 1,000 or less as stated above, and is more preferably 800 or less, especially preferably 600 or less. When the mass-average molecular weight thereof is within that range, the proportion by mass of the polyalkylene glycol in the polycarbonate resin (A) is not excessively high and the properties required of a sheet for cards, such as heat resistance and rigidity, are not impaired.

The lower limit of the proportion of the structural units (c) in all structural units in the polycarbonate resin (A) which each are derived from a dihydroxy compound is preferably 1% by mole or higher, more preferably 3% by mole or higher, especially preferably 5% by mole or higher. The upper limit of the proportion of the structural units (c) is preferably 20% by mole or less, more preferably 15% by mole or less, especially preferably 10% by mole or less. When the proportion thereof is such value, the polycarbonate resin (A) can combine heat resistance and impact resistance, which are preferred for the sheet for cards of the invention.

It is preferred that the structural units in this polycarbonate resin (A) which each are derived from a dihydroxy compound should consist of the structural units (a) and the structural units (c). However, structural units derived from

other dihydroxy compounds may be contained unless these structural units defeat the object of the invention.

Examples of the dihydroxy compounds other than the dihydroxy compound represented by the formula (1) and the polyalkylene glycol include the aliphatic dihydroxy compounds shown in International Publication No. 2004/111106 and the alicyclic dihydroxy compounds shown in International Publication No. 2007/148604.

With respect to aliphatic dihydroxy compounds, it is preferred to select one or more compounds from ethylene glycol, 1,3-propanediol, 1,4-butanediol, 1,5-pentanediol, and 1,6-hexanediol. By copolymerizing these compounds, flexibility and impact resistance can be imparted to the polycarbonate resin (A). Furthermore, the copolymerization has an advantage that since it is easy to change heat resistance temperature, it is easy to regulate processing conditions to be used when the sheet is thermally fusion-bonded to a sheet of another kind or is embossed.

With respect to alicyclic dihydroxy compounds, it is preferred that the compounds should contain a 5-membered cyclic structure or a 6-membered cyclic structure. The 6-membered cyclic structure may have been fixed, by means of covalent bonding, so as to be in a chair form or a boat form. When an alicyclic dihydroxy compound having a 5-membered cyclic structure or 6-membered cyclic structure is used, flexibility and impact resistance are imparted to the polycarbonate to be obtained and, despite this, there is no possibility of excessively lowering the heat resistance temperature. Consequently, such alicyclic dihydroxy compound is suitable for designing products which are mainly required to have heat resistance. The number of carbon atoms contained in the alicyclic dihydroxy compound is generally 70 or less, preferably 50 or less, more preferably 30 or less.

Examples of the alicyclic dihydroxy compound containing a 5-membered cyclic structure or 6-membered cyclic structure include the alicyclic dihydroxy compounds shown in International Publication No. 2007/148604, which was cited above. Preferred examples among these are cyclohexanedimethanol, tricyclodecanedimethanol, adamantanediol, and pentacyclopentadecanedimethanol. From the standpoints of profitability, heat resistance, etc., cyclohexanedimethanol or tricyclodecanedimethanol is most preferred of these. These compounds may be used alone or in combination of two or more thereof. The cyclohexanedimethanol especially preferably is 1,4-cyclohexanedimethanol, which is easily available industrially.

The invention does not exclude partial copolymerization of aromatic dihydroxy compounds represented, for example, by bisphenol A and the like. In general, incorporation of these ingredients can efficiently heighten heat resistance and rigidity.

In each of the first embodiment and second embodiment, the reduced viscosity of the polycarbonate resin (A), which is an index to the molecular weight thereof, is in the range of generally 0.20-1.0 dL/g, preferably 0.30-0.80 dL/g. Incidentally, reduced viscosity is determined by using methylene chloride as a solvent to prepare a solution having a polycarbonate concentration precisely regulated to 0.60 g/dL and measuring the viscosity thereof at a temperature of $20.0 \pm 0.1$°C.

In case where the reduced viscosity of the polycarbonate resin (A) is too low, the resin composition tends to give a sheet for cards which has reduced mechanical strength. Meanwhile, in case where the reduced viscosity of the polycarbonate resin (A) is too high, the resin composition, when being molded, tends to show reduced flowability, which not only results in a decrease in productivity but also is apt to cause appearance failures due to, for example, flow unevenness.

The glass transition temperature of the polycarbonate resin (A) is 90°C or higher and lower than 130°C, as determined through an examination of the temperature dispersion of dynamic viscoelasticity which is made under the conditions of a strain of 0.1%, frequency of 10 Hz, and heating rate of 3 °C/min (examination of dynamic viscoelasticity in accordance with JIS-K7198 Method A (1991)). In each of the first embodiment and second embodiment, it is essential that the glass transition temperature thereof should be lower than 130°C. The glass transition temperature thereof is more preferably 129°C or lower, especially preferably 128°C or lower, and is preferably 95°C or higher, especially preferably 100°C or higher. Usually, the polycarbonate resin (A) has a single glass transition temperature.

In case where the glass transition temperature thereof is 130°C or higher, interlaminar bondability between the overlay sheet and the core sheet is insufficient when a card is produced. In addition, the sheet for cards and the card are hard and brittle and readily crack when being embossed or bent. Consequently, such too high glass transition temperatures are undesirable.

On the other hand, by regulating the glass transition temperature thereof to 90°C or higher, the sheet for cards can be made to have excellent heat resistance and to sufficiently withstand thermal environments which are supposed to be encountered during transparent, storage, use, etc. In addition, the sheet for cards neither becomes thin nor flows during thermal fusion bonding, and a product card having excellent rigidity is obtained.

For regulating the glass transition temperature thereof to a value within that range, use can be made, for example, of a method in which the proportion of structural units (a) derived from a dihydroxy compound represented by the formula (1), the proportion of structural units (b) derived from a cyclohexanedimethanol, the proportion of structural units (c) derived from a polyalkylene glycol, and the proportion and kind of structural units derived from other dihydroxy compound(s), in the polycarbonate resin (A), are suitably regulated within the ranges shown herein unless the effects of the invention are lessened thereby.

The polycarbonate resin (A) can be produced by a polymerization method in general use. Either a phosgene method or a transesterification method in which dihydroxy compounds are reacted with a carbonic diester may be used. Preferred of these is a transesterification method in which a dihydroxy compound represented by the formula (1), either a cyclohexanedimethanol or any of the polyalkylene glycols shown above, other dihydroxy compound(s) which may be used according to need, and a carbonic diester are reacted in the presence of a polymerization catalyst. The transesterification method is a production process in which a dihydroxy compound represented by the formula (1), either a cyclohexanedimethanol or any of the polyalkylene glycols shown above, other dihydroxy compound(s) which may be used according to need, and a carbonic diester are subjected to a transesterification reaction in the presence of both a basic catalyst and an acidic substance for neutralizing the basic catalyst.

Representative examples of the carbonic diester include diphenyl carbonate, ditolyl carbonate, bis(chlorophenyl) carbonate, di-m-cresyl carbonate, dinaphthyl carbonate, bis(biphenyl) carbonate, diethyl carbonate, dimethyl carbonate, dibutyl carbonate, and dicyclohexyl carbonate. Especially preferred of these is diphenyl carbonate.

<Resin Composition (X)>

The resin composition (X) in the invention is a resin composition which includes the polycarbonate resin (A) as a main component.

<Resins other than the Polycarbonate Resin>

Resins other than the polycarbonate resin (A) and additives other than resins can be incorporated into the resin composition (X) for constituting the sheet for cards of the invention, for the purpose of further improving or regulating moldability and other various properties. Examples thereof include resins such as polyester resins, polyethers, polyamides, polyolefins, and poly(methyl methacrylate) and rubbery modifiers such as random and block copolymers of the core-shell type, graft type, or linear type. With respect to the incorporation amount of such resins other than the polycarbonate resin (A) or of additives, the resins and additives may be incorporated preferably in a proportion of 1-30% by mass, more preferably in a proportion of 3-20% by mass, even more preferably in a proportion of 5-10% by mass, based on the resin composition (X) for constituting the sheet for cards of the invention, unless the effects of the invention are lessened thereby.

<Heat Stabilizer>

A heat stabilizer can be incorporated into the resin composition (X) for constituting the sheet for cards of the invention, in order to prevent the resin composition (X) from suffering a decrease in molecular weight or hue deterioration during molding. Examples of the heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-tert-butyl-4-methylphenyl) pentaerythritol diphosphite, 2,2-methylenebis(4,6-di-tert-butylphenyl) octyl phosphite, bis(nonylphenyl) pentaerythritol diphosphite, bis(2,4-di-tert-butylphenyl) pentaerythritol diphosphite, distearyl pentaerythritol diphosphite, tributyl phosphate, triethyl phosphate, trimethyl phosphate, triphenyl phosphate, diphenyl mono-o-xenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, and dipropyl benzenephosphonate. Preferred of these are tris(nonylphenyl) phosphite, trimethyl phosphate, tris(2,4-di-tert-butylphenyl) phosphite, bis(2,4-di-tert-butylphenyl) pentaerythritol diphosphite, bis(2,6-di-tert-butyl-4-methylphenyl) pentaerythritol diphosphite, and dimethyl benzenephosphonate.

One of these heat stabilizers may be used alone, or two or more thereof may be used in combination. With respect to the incorporation amount of the heat stabilizer, the heat stabilizer is incorporated preferably in a proportion of 0.0001-1% by mass, more preferably in a proportion of 0.0005-0.5% by mass, even more preferably in a proportion of 0.001-0.2% by mass, based on the resin composition (X) for constituting the sheet for cards of the invention. By incorporating a heat stabilizer in an amount within that range, the resin composition (X) for constituting the sheet for cards can be prevented from suffering a decrease in molecular weight or discoloration, without causing bleeding of the additive, etc.

<Antioxidant>

A generally known antioxidant can be incorporated into the resin composition (X) for constituting the sheet for cards of the invention, for the purpose of preventing oxidation. Examples of the antioxidant include one or more of

pentaerythritol tetrakis(3-mercaptopropionate), pentaerythritol tetrakis(3-laurylthiopropionate), glycerol 3-stearylthiopropionate, triethylene glycol bis[3-(3-tert-butyl-5-methyl-4-hydroxyphenyl)propionate], 1,6-hexanediol bis[3-(3,5-di-tert-butyl-4-hydroxyphenyl)propionate], pentaerythritol tetrakis[3-(3,5-di-tert-butyl-4-hydroxyphenyl)propionate], octadecyl 3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamamide), diethyl 3,5-di-tert-butyl-4-hydroxybenzylphosphonate, tris(3,5-di-tert-butyl-4-hydroxybenzyl) isocyanurate, tetrakis(2,4-di-tert-butylphenyl) 4,4'-biphenylenediphosphinate, 3,9-bis{1,1-dimethyl-2-[β-(3-tert-butyl-4-hydroxy-5-methylphenyl)propionyloxy]ethyl 2,4,8,10-tetraoxaspiro(5.5)undecane, and the like.

With respect to the incorporation amount of the antioxidant, the antioxidant is incorporated preferably in a proportion of 0.0001-1% by mass, more preferably in a proportion of 0.0005-0.5% by mass, even more preferably in a proportion of 0.001-0.2% by mass, based on the resin composition (X) for constituting the sheet for cards of the invention. By incorporating an antioxidant in an amount within that range, the resin can be prevented from oxidatively deteriorating, without causing bleeding of the antioxidant or a decrease in the mechanical properties of the sheet for cards.

<Lubricant>

A lubricant can be incorporated into the resin composition (X) for constituting the sheet for cards of the invention, for the purpose of imparting surface lubricity. Examples of the lubricant include higher-fatty-acid esters of mono- or polyhydric alcohols, higher fatty acids, paraffin waxes, beeswax, olefin-based waxes, olefin-based waxes having carboxyl groups and/or carboxylic acid anhydride groups, silicone oils, and organopolysiloxanes.

The higher-fatty-acid esters preferably are partial or complete esters of a mono- or polyhydric alcohol having 1-20 carbon atoms with a saturated fatty acid having 10-30 carbon atoms. Examples of such partial or complete esters of a mono- or polyhydric alcohol with a saturated fatty acid include stearic monoglyceride, stearic diglyceride, stearic triglyceride, stearic acid monosorbitate, stearyl stearate, behenic monoglyceride, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, and 2-ethylhexyl stearate. Preferred of these are stearic monoglyceride, stearic triglyceride, pentaerythritol tetrastearate, and behenyl behenate. The higher fatty acid preferably is a saturated fatty acid having 10-30 carbon atoms. Examples of this fatty acid include myristic acid, lauric acid, palmitic acid, stearic acid, and behenic acid. One of those lubricants may be used alone, or a mixture of two or more thereof may be used.

With respect to the incorporation amount of the lubricant, the lubricant is incorporated preferably in a proportion of 0.0001-1% by mass, more preferably in a proportion of 0.0005-0.5% by mass, even more preferably in a proportion of 0.001-0.2% by mass, based on the resin composition (X) for constituting the sheet for cards of the invention. By incorporating a lubricant in an amount within that range, surface lubricity can be imparted to the sheet for cards without causing bleeding of the lubricant or a decrease in the mechanical properties of the sheet for cards.

<Ultraviolet Absorber>

The polycarbonate resin (A) shows substantially no light absorption in the wavelength range of visible light to near ultraviolet. This resin hence has an advantage that yellowing deterioration does not occur with the lapse of time even when an ultraviolet absorber has not been especially incorporated thereinto. However, in the case where the sheet for cards of the invention is to be used as an overlay sheet to produce a card of the invention, a minimum necessary amount of an ultraviolet absorber can be incorporated into the resin composition (X) according to the invention in order to prevent a trouble that ultraviolet rays which have passed through the overlay sheet are absorbed by the core sheet to cause the core sheet to suffer yellowing deterioration.

As the ultraviolet absorber, any of known ultraviolet absorbers, e.g., various commercial ones, can be used without particular limitations. Suitable of these are ultraviolet absorbers which are in general use in known aromatic polycarbonate resins. Examples thereof include: benzotriazole-based ultraviolet absorbers such as 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis(α,α-dimethylbenzyl)phenyl]-2H-benzotriazole, and 2,2'-methylenebis(4-cumyl-6-benzotriazolephenyl); benzoxazine-based ultraviolet absorbers such as 2,2'-p-phenylenebis(1,3-benzoxazin-4-one); and hydroxyphenyltriazine-based ultraviolet absorbers such as 2-(4,6-diphenyl-1,3,5-triazin-2-yl)-5-(hexyl)oxyphenol. With respect to the melting point, ultraviolet absorbers having a melting point in the range of, in particular, 120-250°C are preferred. Use of an ultraviolet absorber having a melting point of 120°C or higher prevents a trouble that the surface of a molded object is fouled by the bleeding phenomenon, in which an ultraviolet absorber migrates and gathers on the molding surface with the lapse of time, and a trouble that when a die or a metallic roller is used for molding, the die or roller is fouled by the bleeding. Consequently, it becomes easy to mitigate the surface dulling of molded articles.

More specifically, use of the following is preferred: benzotriazole-based ultraviolet absorbers such as 2-(2'-hydroxy-5'-methylphenyl)benzotriazole, 2-(2'-hydroxy-3'-tert-butyl-5'-methylphenyl)-5-chlorobenzotriazole, 2-[2'-hydroxy-3'-(3",4",5",6"-tetrahydrophthalimidomethyl)-5'-methylphenyl]benzotriazole, 2,2-methylenebis[4-(1,1,3,3-tetramethylbutyl)-6-(2H-benzotriazol-2-yl)]phenol, and 2-(2-hydroxy-3,5-dicumylphenyl)benzotriazole; and hydroxyphenyltriazine-based ultraviolet absorbers such as 2-(4,6-diphenyl-1,3,5-triazin-2-yl)-5-(hexyl)oxyphenol. Especially preferred of these are 2-(2-hydroxy-3,5-dicumylphenyl)benzotriazole, 2,2-methylenebis[4-(1,1,3,3-tetramethylbutyl)-6-(2H-benzotriazol-2-yl)]phenol, and 2-(4,6-diphenyl-1,3,5-triazin-2-yl)-5-(hexyl)oxyphenol. These ultraviolet absorbers may be used alone or in combination of two or more thereof.

With respect to the incorporation amount of the ultraviolet absorber, the ultraviolet absorber is incorporated preferably in a proportion of 0.0001-1% by mass, more preferably in a proportion of 0.0005-0.5% by mass, even more preferably in a proportion of 0.001-0.2% by mass, based on the resin composition (X) for constituting the sheet for cards of the invention. By incorporating an ultraviolet absorber in an amount within that range, weatherability can be improved while preventing the ultraviolet absorber from bleeding and migrating to the surfaces of the sheet for cards and without causing a decrease in the mechanical properties of the sheet for cards.

<Epoxy Compound>

Furthermore, an epoxy compound can be incorporated in order to further improve the hydrolytic resistance of the resin composition (X) for constituting the sheet for cards of the invention. Examples of the epoxy compound include epoxidized soybean oil, epoxidized linseed oil, phenyl glycidyl ether, allyl glycidyl ether, t-butylphenyl glycidyl ether, 3,4-epoxycyclohexylmethyl 3',4'-epoxycyclohexylcarboxylate, 3,4-epoxy-6-methylcyclohexylmethyl 3',4'-epoxy-6'-methylcyclohexylcarboxylate, 2,3-epoxycyclohexylmethyl 3',4'-epoxycyclohexylcarboxylate, 4-(3,4-epoxy-5-methylcyclohexyl)butyl 3',4'-epoxycyclohexylcarboxylate, 3,4-epoxycyclohexylethylene oxide, cyclohexylmethyl 3,4-epoxycyclohexylcarboxylate, 3,4-epoxy-6-methylcyclohexylmethyl 6'-methylcyclohexylcarboxylate, bisphenol A diglycidyl ether, tetrabromobisphenol A glycidyl ether, the diglycidyl ester of phthalic acid, the diglycidyl ester of hexahydrophthalic acid, bisepoxydicyclopentadienyl ether, bisepoxyethylene glycol, bisepoxycyclohexyl adipate, butadiene diepoxide, tetraphenylethylene epoxide, octyl epoxytallate, epoxidized polybutadiene, 3,4-dimethyl-1,2-epoxycyclohexane, 3,5-dimethyl-1,2-epoxycyclohexane, 3-methyl-5-t-butyl-1,2-epoxycyclohexane, octadecyl 2,2-dimethyl-3,4-epoxycyclohexylcarboxylate, N-butyl 2,2-dimethyl-3,4-epoxycyclohexylcarboxylate, cyclohexyl 2-methyl-3,4-epoxycyclohexylcarboxylate, N-butyl 2-isopropyl-3,4-epoxy-5-methylcyclohexylcarboxylate, octadecyl 3,4-epoxycyclohexylcarboxylate, 2-ethylhexyl 3',4'-epoxycyclohexylcarboxylate, 4,6-dimethyl-2,3-epoxycyclohexyl 3',4'-epoxycyclohexylcarboxylate, 4,5-epoxytetrahydrophthalic anhydride, 3-t-butyl-4,5-epoxytetrahydrophthalic anhydride, diethyl 4,5-epoxy-cis-1,2-cyclohexyldicarboxylate, and di-N-butyl 3-t-butyl-4,5-epoxy-cis-1,2-cyclohexyldicarboxylate. Bisphenol A diglycidyl ether is preferred from the standpoints of compatibility, etc.

With respect to the incorporation amount of the epoxy compound, the epoxy compound is incorporated preferably in a proportion of 0.0001-5% by mass, more preferably in a proportion of 0.001-1% by mass, even more preferably in a proportion of 0.005-0.5% by mass, based on the resin composition (X) for constituting the sheet for cards of the invention. By incorporating an epoxy compound in an amount within that range, hydrolytic resistance can be improved without causing bleeding of the epoxy compound or a decrease in the mechanical properties of the sheet for cards.

<Inorganic Filler>

It is preferred that the resin composition (X) in the invention should further contain an inorganic filler. In the case where the sheet for cards of the invention is to be used as an overlay sheet, it is preferred that an inorganic filler having transparency to visible light should be added to the resin composition (X) according to the invention for the purpose of improving impact resistance and punchability. The expression "having transparency to visible light" herein means that even when this inorganic filler has been incorporated into a sheet for cards of the invention, this sheet is in such a state that when the sheet is viewed from the side of one surface thereof, the scene on the opposite side can be sufficiently recognized. Specifically, that expression means that the sheet having a thickness of 0.2 mm (200 μm) has a total light transmittance, as measured in accordance with JIS-K7105 (1981), of 80% or higher.

As the inorganic filler having transparency to visible light which is to be added to the overlay sheet for cards, conventionally known inorganic fillers can be used. Suitable of these are silicic acid, magnesium silicate, glass flakes, and the like. In this case, the average particle diameter of the inorganic filler is preferably 5 μm or less, more preferably 4 μm or less.

The amount of the inorganic filler contained in the overlay sheet for cards, per 100% by mass the resin composition (X), is preferably 0.5% by mass or more, more preferably 1.0% by mass or more, and is preferably 5.0% by mass or less, more preferably 4.0% by mass or less.

By regulating the average particle diameter of the inorganic filler to be added to the overlay sheet for cards and the content thereof so as to be within those ranges, transparency is ensured in the card produced using the overlay

sheet for cards of the invention. Furthermore, this card not only has improved impact resistance to suffer no cracking in the embossed part, but also has improved punchability to give flat cut surfaces through punching. Incorporation of the inorganic filler is hence preferred.

On the other hand, in the case where the sheet for cards of the invention is to be used as a core sheet, it is preferred to add an inorganic filler to the resin composition (X) according to the invention for the purpose of improving rigidity to inhibit the card from curling upon embossing.

As the inorganic filler to be added to the core sheet for cards, conventionally known inorganic fillers can be used. Suitable of these are talc, magnesium silicate, calcium carbonate, silica, mica, and the like. These inorganic fillers may be used alone or as a mixture of two or more thereof. In this case, the average particle diameter of the inorganic filler is preferably 3 μm or larger, more preferably 5 μm or larger, and is preferably 10 μm or less, more preferably 8 μm or less.

The amount of the inorganic filler contained in the core sheet for cards, per 100% by mass the resin composition (X), is preferably 2% by mass or more, more preferably 4% by mass or more, and is preferably 10% by mass or less, more preferably 8% by mass or less.

By regulating the average particle diameter of the inorganic filler to be added to the core sheet for cards and the content thereof so as to be within those ranges, not only the card produced using the core sheet for cards of the invention can be made to have improved rigidity and be inhibited from curling upon embossing, but also this card has further improved impact resistance to suffer no cracking in the embossed part. Incorporation of the inorganic filler is hence preferred.

<Colorant>

In the case where the sheet for cards of the invention is to be used as a core sheet, it is preferred to incorporate a colorant into the resin composition (X). Examples thereof include organic pigments and inorganic pigments. Preferred of these are inorganic pigments having a refractive index of 2 or higher, such as, for example, titanium oxide, lead titanate, potassium titanate, zirconium oxide, zinc sulfide, antimony oxide, and zinc oxide. Especially preferred of these is titanium oxide, which has a high refractive index.

By incorporating a pigment having a high refractive index, such as, for example, titanium oxide, the core sheet can be obtained as an opaque white sheet. For example, when the inlet sheet which will be described later is superposed so as to be sandwiched between such core sheets, the inlet sheet can be hidden so that the antenna substrate or the like of the inlet sheet cannot be seen.

Titanium oxide can exist in the anatase form, rutile form, or brookite form. However, it is preferred to use the rutile form, which has a high refractive index. Incidentally, either titanium oxide produced by the chloride process or titanium oxide produced by the sulfate process can be used.

It is preferred that the surface of the titanium oxide should have been coated with at least one inert inorganic oxide selected from silica, alumina, and zirconia. By coating the surface thereof with an inert inorganic oxide, the photocatalysis of the titanium oxide can be inhibited and, hence, the polycarbonate resin (A) can be prevented from being depolymerized by the photocatalysis of titanium oxide during production and use.

From the standpoint of improving dipersibility in the base resin, it is more preferred to use titanium oxide in which the surface thereof has been treated with at least one inorganic compound selected from siloxane compounds, silane coupling agents, and the like or with at least one organic compound selected from polyols and polyethylene glycol.

The average particle diameter of the titanium oxide is in the range of preferably 0.1-1 μm, more preferably 0.2-0.5 μm. So long as the average particle diameter of the titanium oxide is within that range, excellent hiding properties can be imparted without reducing the mechanical properties of the card of the invention.

The amount of the colorant contained in the core sheet for cards of the invention, per 100% by mass the resin composition (X), is preferably 1-20% by mass. The lower-limit value thereof is preferably 3% by mass or more, more preferably 5% by mass or more. The upper-limit value thereof is more preferably 15% by mass or less, even more preferably 10% by mass or less. By incorporating a colorant in an amount within that range, inner parts of the card of the invention can be prevented from being exposed and the card can be made to have an excellent appearance, without lowering the mechanical strength of the card.

Additives other than those described above, such as, for example, a light stabilizer and a plasticizer, can be further incorporated into the resin composition (X) for constituting the sheet for cards of the invention.

<Sheet for Cards>

The sheet for cards of the invention is characterized by having a layer constituted of the resin composition (X). This sheet for cards may consist of a single layer constituted of the resin composition (X). Alternatively, one or more layers of each of compositions which each are the resin composition (X) but which differ from each other in the composition

of the polycarbonate resin (A) or in the proportions of the components constituting the resin composition (X) may be laminated to produce the sheet for cards.

It is also possible to laminate one or more layers of a resin composition different from the resin composition (X) to a layer constituted of the composition (X) to produce the sheet for cards.

The resin composition different from the resin composition (X) is not particularly limited so long as the composition is a resin composition which includes as a main component a resin other than the polycarbonate resin (A) and unless this resin composition lessens the features of the invention. Examples of the resin usable as a main component include polycarbonate resins which contain no structural unit derived from a dihydroxy compound represented by the formula (1), acrylic resins, alicyclic polyolefin resins, styrene resins, polyester resins, poly(vinyl chloride) resins, phenolic resins, melamine resins, and epoxy resins.

Processes for producing the sheet for cards of the invention will be explained below, but processes for producing the sheet should not be construed as being limited to the following.

Examples of processes for producing the sheet for cards of the invention include: a process in which raw materials including the polycarbonate resin (A) and optional ingredients such as an ultraviolet absorber, inorganic filler, colorant, another resin, and other additives are directly mixed and the mixture is introduced into an extruder and molded; and a process in which the raw materials are melt-mixed using a twin-screw extruder and extruded in a strand form to produce pellets and the resultant pellets are introduced into an extruder and molded. In either process, it is necessary to take account of the possibility that the polycarbonate resin (A) might suffer a decrease in molecular weight due to hydrolysis. From the standpoint of evenly mixing the raw materials, it is preferred to select the latter process. An explanation is hence given below on the latter process.

First, the polycarbonate resin (A) and other raw materials which are incorporated according to need are sufficiently dried to remove water therefrom and mixed together by means of a ribbon blender, tumbling mixer, Henschel mixer, or the like, and the resultant mixture is melt-kneaded using a twin-screw extruder and extruded into a strand form to produce pellets. Alternatively, use may be made of a method in which the polycarbonate resin (A) is melt-kneaded with an extruder and the other raw materials which are incorporated according to need are separately supplied to the extruder from a feeder continuously or successively during the melt kneading to produce pellets. In this operation, it is preferred to suitably regulate the melt kneading temperature to prevent the temperature from rising excessively, while taking account of the shear heat generation which occurs when the resin is plasticated, a viscosity change due to a change in the composition of each raw material or in the proportions of the raw materials, etc. Specifically, the molding temperature is preferably 200-260°C, more preferably 210-250°C, even more preferably 220-240°C.

In this operation, the pellets may be produced so as to be constituted of the resin composition (X) for constituting the invention. Alternatively, use may be made of a method in which pellets are produced beforehand as a high-concentration masterbatch of other raw materials incorporated according to need and, when the sheet for cards of the invention is produced, these pellets are suitably blended with the polycarbonate resin (A) for dilution or with another resin to obtain a sheet for cards which includes the resin composition (X) in a desired proportion.

The sheet for cards of the invention can be formed by a known technique such as, for example, T-die extrusion casting or calendaring. Suitable of these is sheet formation by T-die extrusion casting. Specifically, use can be made of a method in which the pellets are sufficiently dried, subsequently heated and melted in an extruder, and extruded through the slit of a T-die and the extrudate is transferred from the casting roll to a cooling roll to form a film. From the standpoint of inhibiting decomposition or deterioration and inhibiting coloring, it is preferred to suitably set an extrusion temperature in the range of 200-260°C. According to need, different resin compositions can be co-extruded using a multi-manifold die, a feed block, or the like to obtain a laminated sheet.

It is preferred that the temperature of the casting roll should be regulated in accordance with the kind and composition of the resin. However, the temperature thereof is preferably 50°C or higher from the standpoint of sufficiently transferring the shape of the roll surface. From the standpoint of preventing winding around the roll, the temperature thereof is preferably 130°C or lower, more preferably 120°C or lower, especially preferably 110°C or lower.

In the case where the sheet for cards of the invention is used as an overlay sheet for cards, it is preferred that at least one surface of the sheet should have a 10-point average roughness in the range of 3-30 μm. The lower-limit value of the 10-point average roughness thereof is more preferably 10 μm or higher. The upper-limit value of the 10-point average roughness thereof is more preferably 20 μm or less. When the 10-point average roughness thereof is 3 μm or higher, the following advantages are brought about. When this sheet for cards is superposed on another sheet and the sheets are fusion-bonded with pressing, then air is sufficiently expelled from the interface between the sheets and from the interface between each sheet and the metal plate for pressing, thereby giving cards which have no deformation in the surfaces thereof. In addition, since the sheet surface retains slip properties, this sheet for cards does not decrease in handleability. Such values of 10-point average roughness are hence suitable. Meanwhile, so long as the 10-point average roughness thereof is 30 μm or less, a satisfactory close contact between sheets is attained and adhesion to other sheets can be maintained. Such values of 10-point average roughness are hence suitable. A 10-point average roughness within that range can be attained, for example, by matting the surface of the overlay sheet for cards.

Examples of methods for the matting include the following. Use may be made of a method in which a sheet having a mirror surface is formed first and the surface is thereafter processed using a matting roll or the like. Alternatively, use may be made of a method in which when a sheet is formed by extrusion molding, a matting roll or the like is used in place of the casting roll to conduct the extrusion molding, thereby performing surface processing. For example, a sheet which has been extruded through a die is sandwiched between a metallic matting roll which has fine irregularities formed in the surface thereof and a rubber roll which has fine irregularities formed in the surface thereof (hereinafter referred to as "rolls for matting"), and the rolls for matting are rotated to pass the sheet between the rolls, while suitably applying a pressure, etc. thereto, to transfer the surface irregularities of the rolls for matting to the sheet surfaces. Thus, a sheet for cards can be obtained in which the front and back surfaces have been matted. Incidentally, methods for matting should not be construed as being limited to the methods described above.

In the sheet for cards of the invention, a printed layer can be disposed on at least one surface thereof. The printed layer may be disposed by a known printing technique, e.g., gravure printing, offset printing, or screen printing. The printed layer has any desired design, e.g., the grain of stone, the grain of wood, a geometrical pattern, or an abstract design. The printed layer may be a layer formed by partial printing or solid printing, or both a layer formed by partial printing and a layer formed by solid printing may have been disposed.

The pigment and solvent which are contained in the printing ink to be used for forming the printed layer are not particularly limited, and pigments and solvents for general use can be applied. In particular, printing inks which contain an acrylic resin, urethane resin, vinyl chloride/vinyl acetate copolymer, or the like are suitable because even when a printed layer has been disposed using these inks, this sheet can be used to produce the card of the invention without arousing troubles such as, for example, delamination.

In the case where the sheet for cards of the invention is used as an overlay sheet, there are no particular limitations on the thickness thereof. However, the thickness thereof is usually preferably 20-150 μm. When the thickness thereof is too small beyond that range, there are cases where troubles arise, such as insufficient rigidity, cracking which occurs upon embossing, and insufficient surface hardness. When the thickness thereof is too large beyond that range, there are cases where this sheet arouses a trouble that the product has too large a thickness or embossing results in unclear characters.

In the case where the sheet for cards of the invention is used as a core sheet, there are no particular limitations on the thickness thereof. However, it is usually preferred that the thickness thereof should be 25-250 μm for thin grades and be 250-800 μm for thick grades. Alternatively, a plurality of such thin sheets may be laminated to form a thick sheet. Such a laminated core sheet is frequently configured, for example, in the case where an inlet sheet having an IC chip and an antenna circuit is disposed in an inner part. When the thickness thereof is too small beyond that range, there are cases where troubles arise, such as insufficient rigidity and insufficient impact resistance. When the thickness thereof is too large beyond that range, there are cases where this sheet arouses a trouble that the product has too large a thickness or embossing results in unclear characters.

The sheet for cards of the invention is a sheet which is excellent in terms of rigidity and impact resistance. In the sheet for cards of the invention, the value of flexural modulus, which is an index to rigidity and impact resistance, may be preferably 2,200 MPa or higher, more preferably 2,300 MPa or higher, and be preferably 3,000 MPa or less, more preferably 2,900 MPa or less.

By regulating the flexural modulus thereof to 2,200 MPa or higher, the card of the invention can be inhibited from suffering an embossing curl when being embossed. By regulating the flexural modulus thereof to 3,000 MPa or less, the card of the invention, when being embossed, can be prevented from cracking in the embossed part. Such values of flexural modulus are hence suitable.

A flexural modulus within that range can be attained by regulating, for example, the ratio of the contents of respective kinds of structural units in the polycarbonate resin (A) according to the invention or the average particle diameter, addition amount, etc. of the inorganic filler to be added to the resin composition (X), within the ranges shown herein.

The sheet for cards of the invention is excellent in terms of weatherability, in particular, unsusceptibility to discoloration by UV. The value of color difference ΔYI of the sheet as measured after 50-hour UV irradiation, which is an index to that property, is preferably 1.0 or less, more preferably 0.9 or less, even more preferably 0.8 or less. When a color difference ΔYI within that range is attained, it is possible to provide a sheet for cards which does not yellow even when used outdoors over a long period or placed in an environment where the sheet is irradiated with UV and which retains the color tone. A value of color difference ΔYI within that range can be attained, for example, by regulating the composition of the resin composition (X) according to the invention, the thickness of the sheet for cards of the invention, etc. within the preferred ranges shown herein.

The sheet for cards of the invention has excellent surface hardness. The pencil hardness thereof, which is an index to surface hardness, is preferably F or higher, more preferably H or higher. When the pencil hardness thereof is within that range, it is possible to provide a card having excellent marring resistance. A pencil hardness within that range can be attained, for example, by regulating the thickness of the sheet or the composition of the polycarbonate resin (A)

within the preferred range shown herein.

<Card>

The card of the invention is characterized by being produced using the sheet for cards of the invention. In the card of the invention, the sheet for cards of the invention may have been applied only as an overlay sheet, or may have been applied both as an overlay sheet and as a core sheet. Preferred of these is the case in which the sheet for cards of the invention has been applied especially as at least an overlay sheet.

In the case where the sheet for cards of the invention is applied only as an overlay sheet in the card of the invention, the resin which constitutes the core sheet that is to be laminated to this sheet for cards of the invention is a lactic acid polymer.

Lactic acid polymers are resins derived from a plant-derived starting material like the polycarbonate resin (A). Consequently, when the sheet for cards of the invention is applied as an overlay sheet, the card of the invention can be made to attain an increased proportion of plant-derived starting materials and a further reduction in environmental burden, by using a lactic acid polymer resin as the resin for constituting the core sheet.

A lactic acid polymer is a polymer obtained by the condensation polymerization of monomers including lactic acid as a main component. Specifically, it is preferred to use poly(L-lactic acid), which is made up of structural units of L-lactic acid, poly(D-lactic acid), which is made up of structural units of D-lactic acid, poly(D,L-lactic acid), which is made up of both structural units of L-lactic acid and structural units of D-lactic acid, or a mixture constituted of a combination of two or more thereof.

There are two optical isomers of lactic acid, i.e., L-lactic acid and D-lactic acid, and lactic acid polymers differ in crystallinity, depending on the ratio between those two kinds of structural units. For example, a random copolymer in which the ratio of L-lactic acid to D-lactic acid is about from 90:10 to 10:90 is a perfectly amorphous polymer that has no crystallinity and that softens at around the glass transition temperature of 60°C. In contrast, a random copolymer in which the ratio of L-lactic acid to D-lactic acid is about from 100:0 to 90:10 or about from 10:90 to 0:100 is a crystalline or semi-crystalline polymer having crystallinity, although this polymer has a glass transition temperature of about 60°C like the former polymer. The crystallinity thereof is determined by the ratio of L-lactic acid to D-lactic acid; this polymer gives an amorphous material with excellent transparency when rapidly cooled immediately after melt extrusion, and gives a crystalline material when slowly cooled after melt extrusion. In this connection, a homopolymer produced from L-lactic acid only or from D-lactic acid only is a semi-crystalline polymer having a melting point of 180°C or higher.

Preferred lactic acid polymers, among those polymers, to be used in the invention are lactic acid polymers in which the ratio of L-lactic acid to D-lactic acid is from 99:1 to 92:8 or from 1:99 to 8:92, in particular, is from 98:2 to 94:6 or from 2:98 to 6:94, and especially is from 97:3 to 95:5 or from 3:97 to 5:95. The reasons for this are as follows.

In an operation in which several lactic acid polymer-based sheets (layers) that include a lactic acid polymer as a main component are stacked and pressed with heating to fusion-bond the sheets to each other, the following troubles arise when the lactic acid polymer has high crystallinity. In one case, the polymer undesirably crystallizes during the hot pressing, making the fusion bonding difficult. In the other case, when the heating temperature has been set at a temperature around which the lactic acid polymer comes into a completely molten state, then the lactic acid polymer melts and flows during the hot pressing, making it difficult to obtain a card having a satisfactory appearance. Consequently, lactic acid polymers having high crystallinity are not considered to be preferred. In addition, the hot press has a configuration that is suitable for the fusion bonding of vinyl chloride resins, which have been exclusively used hitherto, and the use temperature range thereof is usually from 100 to 170°C, preferably about from 120 to 150°C. It is therefore preferred to use a lactic acid polymer which can be sufficiently fusion-bonded at a temperature within that range. From these standpoints, that ranges of the ratio are preferred.

Such a value of the ratio of L-lactic acid to D-lactic acid may be attained by using as the only polymer a lactic acid polymer resin obtained so as to have the value of the ratio. Alternatively, a plurality of lactic acid polymers differing in that ratio may be mixed together so as to result in a mixture in which that ratio determined from the mass-average proportions is within the range.

As a lactic acid polymer, use can be made of a copolymer of a lactic acid and another hydroxycarboxylic acid. Examples thereof include bifunctional aliphatic hydroxycarboxylic acids such as optical isomers of lactic acid, glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, and 2-hydroxycaproic acid and lactones such as caprolactone, butyrolactone, and valerolactone.

The polymer may further contain a small amount of comonomer units derived from a non-aliphatic carboxylic acid such as terephthalic acid, a non-aliphatic diol such as bisphenol A or an ethylene oxide adduct thereof, or a hydroxycarboxylic acid other than lactic acid. The polymer may contain a residue of a chain extender in a small amount.

For polymerization for producing a lactic acid polymer, a known polymerization method such as, for example, a condensation polymerization method or a ring-opening polymerization method can be employed. In the condensation

polymerization method, for example, L-lactic acid or D-lactic acid or a mixture of these is directly subjected to dehydrating condensation polymerization, whereby poly(lactic acid) having a desired composition can be obtained. In the ring-opening polymerization method (lactide method), poly(lactic acid) can be obtained from lactide, which is the cyclic dimer of lactic acid, using a selected catalyst while using a polymerization regulator or the like according to need.

Commercial products of lactic acid polymers can be used. Examples thereof include "Lacea" Series, manufactured by Mitsui Chemicals, Inc., and "Ingeo" Series, manufactured by Nature Works LLC.

In the case where a lactic acid polymer is to be used in the core sheet of the card according to the invention, the amorphous aromatic polyester resin or thermoplastic elastomer disclosed in patent document 4 may be incorporated. There are cases where this incorporation brings about improved adhesion when an aromatic polyester resin sheet, a printed layer, or the like is disposed.

It is a matter of course that also by applying the sheet for cards of the invention to both the overlay sheet and core sheet of the card of the invention, the card of the invention can be made to attain an increased proportion of plant-derived starting materials and a further reduction in environmental burden. In addition, this configuration is preferred also from the standpoint that the overlay sheet and the core sheet show further improved adhesion to each other.

Other layers may be further superposed in the card of the invention unless this superposition departs from the essential points of the invention. Examples thereof include inlet sheets having both an IC chip and an antenna circuit and adhesive layers, besides the printed layers.

Processes for producing the card of the invention are explained below by reference to one example thereof. However, the production processes should not be construed as being limited to the following example.

The card of the invention can be produced, for example, by stacking, in a given order, a core sheet and an overlay sheet optionally together with the inlet sheet which will be described later, pressing the stack with heating by means of a pressing machine to thermally fusion-bond and laminate the sheets, cooling the laminate to room temperature, and then punching a card out of the laminate.

Examples of configurations of the card of the invention include a configuration in which an overlay sheet has been superposed on each of the front and back surfaces of a core sheet and a configuration in which an inlet sheet has been sandwiched between core sheets and an overlay sheet has been superposed on each of the front and back surfaces of the core sheets. The card can have any desired configuration so long as an overlay sheet constitutes an outermost layer.

Besides being produced by the hot-pressing method described above, the card of the invention can be produced also by a known laminating technique such as dry laminating or wet laminating.

The inlet sheet can be configured, for example, by forming an antenna circuit on a substrate made of a resin and mounting electronic parts, e.g., an IC chip and a capacitor, thereon.

As the substrate of the inlet sheet, use can be made, for example, of known resins such as those shown herein, besides the polycarbonate resin (A) according to the invention. In particular, use of the same resin as the core sheets is preferred because this inlet sheet shows satisfactory thermal fusion-bondability to the core sheets.

The card of the invention comes to have an only slight embossing curl when being embossed to impart characters or the like thereto, and is a card having excellent embossability.

When the card of the invention is embossed at 23°C using an embossing encoder DC9000 (manufactured by Datacard Japan Ltd.) to impart7B-font characters arranged in three lines each composed of 19 characters, then the resultant embossing curl is preferably 2.5 mm or less, more preferably 2.2 mm or less, even more preferably 2.0 mm or less.

Embossability can be evaluated in terms of the height of the characters imparted by embossing (hereinafter referred to as "embossing height"). The lower-limit value of the embossing height is preferably 0.40 mm, more preferably 0.42 mm. There is no particular upon limit on the embossing height. However, it is preferred that the embossing height should be 0.48 mm or less from the standpoint of preventing troubles from arising depending on uses of the card of the invention.

The card of the invention is produced using the sheet for cards of the invention so that at least one layer of the card is constituted of the sheet. This card is excellent in terms of all of heat resistance, weatherability, rigidity, punchability, and embossability, and is capable of attaining a reduction in environmental burden. Consequently, the card of the invention is suitable for use as cards to be used in large quantities, in particular, magnetic stripe cards produced using a magnetic tape, IC cards produced using an IC chip, etc.

Examples

The invention will be explained below in more detail by reference to Examples, but the invention should not be construed as being limited to the following Examples.

[Examples of the First Embodiment]

The methods used for determining or evaluating various measured values and evaluation are as follows.

(1) Heat Resistance (Glass Transition Temperature)

The sheet for cards produced in each Production Example was subjected as a sample to an examination of the temperature dispersion of dynamic viscoelasticity which was made under the conditions of a strain of 0.1%, a frequency of 10 Hz, and a heating rate of 3 °C/min (examination of dynamic viscoelasticity in accordance with JIS-K7198 Method A (1991)) using viscoelasticity spectrometer DVA-200 (manufactured by IT Keisoku Seigyo K.K.). The temperature at which the loss tangent (tan$\delta$) showed a main-dispersion peak was taken as the glass transition temperature.

(2) Weatherability (Color Difference $\Delta$YI)

Using Eye Super UV Tester SUV-W151 (manufactured by Iwasaki Electric Co., Ltd.) as a tester, UV was irradiated upon the sheet for cards, as a sample, produced in each Production Example, under the conditions of a UV irradiation intensity of 75 mW/cm$^2$, an irradiation temperature of 63°C, and an irradiation humidity of 50%. The YI value (yellowness) of the sample was measured before UV irradiation and after 50-hour UV irradiation using a spectrometric colorimeter ("SC-T", manufactured by Suga Test Instruments Co., Ltd.) in accordance with JIS-K7103 (1977). The color difference $\Delta$YI, which is the difference between before and after the test, was calculated. The samples which had a $\Delta$YI value of 0 or larger but less than 1.0 were rated as " O ", and the samples which had a $\Delta$YI value of 1.0 or larger were rated as " × ".

(3) Rigidity (Flexural Modulus)

A test piece having a size of 38 mm × 38 mm was cut out of the sheet for cards produced in each Production Example. Using a Taber Stiffness Tester (manufactured by Taber Inc.), the test piece was examined for flexural rigidity F (unit: g·cm) at a bending angle of 15° in accordance with JIS-P8125 (2000). This value was substituted into the following calculation formula (I) to calculate the flexural modulus (unit: Pa). The thickness of the test piece was expressed by d (cm).

$$\text{Flexural modulus (Pa)} = 2\times0.01\times F/(d^3\times9.8) \qquad (I)$$

(4) Ten-point Average Roughness

A surface of the sheet for cards was examined with surface roughness meter "Surfcorder SE-40D" (manufactured by Kosaka Laboratory Ltd.) under the conditions of a feeding speed of 0.5 mm/sec, a reference length of 8 mm, and a cutoff value of 0.8 mm in accordance with JIS-B0601 (1994) to determine the 10-point average roughness (unit: $\mu$m) of the sheet for cards.

(PRODUCTION EXAMPLE 1)

A polycarbonate resin which included structural units derived from isosorbide and structural units derived from 1,4-cyclohexanedimethanol in a former-to-latter ratio of 40:60 (% by mole) was kneaded at 220°C using a 40-mm$\phi$ corotating twin-screw extruder and then extruded through a T-die. Subsequently, the extrudate was rapidly cooled with an 80°C casting roll and, simultaneously therewith, the surface on the reverse side from the surface in contact with the casting roll was brought into contact with a matting roll to mat the surface. Thus, an overlay sheet for cards (A-1) which had a thickness of 100 $\mu$m was produced. The matted surface had a 10-point average roughness of 15 $\mu$m.

(PRODUCTION EXAMPLE 2)

A polycarbonate resin which included structural units derived from isosorbide and structural units derived from 1,4-cyclohexanedimethanol in a former-to-latter ratio of 50:50 (% by mole) was kneaded at 220°C using a 40-mm$\phi$ corotating twin-screw extruder and then extruded through a T-die. Subsequently, the extrudate was rapidly cooled with an 80°C casting roll and, simultaneously therewith, the surface on the reverse side from the surface in contact with the casting roll was brought into contact with a matting roll to mat the surface. Thus, an overlay sheet for cards (A-2) which had a thickness of 100 $\mu$m was produced. The matted surface had a 10-point average roughness of 14 $\mu$m.

(PRODUCTION EXAMPLE 3)

An aromatic polycarbonate resin (trade name "Iupilon S3000", manufactured by Mitsubishi Engineering-Plastics Corp.) was kneaded at 260°C using a 40-mm$\phi$ corotating twin-screw extruder and then extruded through a T-die.

Subsequently, the extrudate was rapidly cooled with a 130°C casting roll and, simultaneously therewith, the surface on the reverse side from the surface in contact with the casting roll was brought into contact with a matting roll to mat the surface. Thus, an overlay sheet for cards (PC) which had a thickness of 100 μm was produced. The matted surface had a 10-point average roughness of 16 μm.

(PRODUCTION EXAMPLE 4)

Forty percents by mass amorphous poly(lactic acid) resin (trade name "Ingeo 4060D", manufactured by Nature Works LLC; glass transition temperature, 55°C) was dry-blended with 60% by mass crystalline poly(lactic acid) resin (trade name "Ingeo 4032D", manufactured by Nature Works LLC; glass transition temperature, 55°C). This blend was kneaded at 200°C using a 40-mmϕ corotating twin-screw extruder and then extruded through a T-die. Subsequently, the extrudate was rapidly cooled with a 50°C casting roll and, simultaneously therewith, the surface on the reverse side from the surface in contact with the casting roll was brought into contact with a matting roll to mat the surface. Thus, an overlay sheet for cards (PLA) which had a thickness of 100 μm was produced. The matted surface had a 10-point average roughness of 15 μm.

(PRODUCTION EXAMPLE 5)

A hundred percents by mass the resin used in Production Example 1 was dry-blended with 10% by mass rutile-form titanium oxide (trade name "KRONOS 2230", manufactured by KRONOS Inc.) as a colorant. This blend was kneaded at 220°C using a 40-mmϕ corotating twin-screw extruder and then extruded through a T-die. Subsequently, the extrudate was rapidly cooled with an 80°C casting roll. Thus, a core sheet for cards (A-Core) which had a thickness of 150 μm was produced.

(PRODUCTION EXAMPLE 6)

Forty percents by mass amorphous poly(lactic acid) resin (trade name "Ingeo 4060D", manufactured by Nature Works LLC; glass transition temperature, 55°C) was dry-blended with 60% by mass crystalline poly(lactic acid) resin (trade name "Ingeo 4032D", manufactured by Nature Works LLC; glass transition temperature, 55°C) and 10% by mass rutile-form titanium oxide (trade name "KRONOS 2230", manufactured by KRONOS Inc.) as a colorant. This blend was kneaded at 200°C using a 40-mmϕ corotating twin-screw extruder and then extruded through a T-die. Subsequently, the extrudate was rapidly cooled with a 50°C casting roll. Thus, a core sheet for cards (PLA-Core) which had a thickness of 150 μm was produced.

[Table 1]

| | Overlay sheet | | | | Core sheet | |
|---|---|---|---|---|---|---|
| | Production Example 1 | Production Example 2 | Production Example 3 | Production Example 4 | Production Example 5 | Production Example 6 |
| Name of sheet | A-1 | A-2 | PC | PLA | A-Core | PLA-Core |
| Glass transition temperature (°C) | 90 | 101 | 150 | 55 | 99 | 55 |
| Color difference ΔYI | 0.1 | 0.0 | 28.9 | 0.1 | - | - |
| Flexural modulus (MPa) | 2200 | 2240 | 2300 | 3500 | 2300 | 3600 |

Subsequently, an ink based on a vinyl chloride/vinyl acetate copolymer was used to form a hiding printed layer, by screen printing, on one surface of each of the core sheets for cards produced in some of the Production Examples. Two layers of the core sheet were stacked so that the hiding printed layers faced outward. The stacked layers of the core sheet were sandwiched from the upper and lower sides thereof between two layers of each of the overlay sheets for cards produced in some of the Production Examples, so as to result in each of the combinations shown in the following Table 2 and so that the matted surfaces of the overlay sheet faced outward. These four sheet layers were sandwiched between two chrome-plated plates, pressed at an areal sheet pressure of $9.8 \times 10^5$ Pa at 130°C for 10 minutes, and then

cooled to room temperature. The resultant laminate was taken out. Thus, a card base sample was obtained.

(5) Punchability

Dumbbell No. 1 specimens were punched out of the card base sample in accordance with JIS-K6251 (2004). The samples which gave specimens in which a trouble such as a rough cut surface or cracking occurred in eight or more of ten punching operations were rated as "×", the samples in which the trouble occurred in three to seven of ten punching operations were rated as " △ ", and the samples in which the trouble occurred in two or less of ten punching operations or the trouble did not occur at all were rated as " ○ ".

(6) Embossing Curl

A card shape was punched out of the card base sample. Thereafter, the card was embossed using an embossing encoder DC9000 (manufactured by Datacard Japan Ltd.) at 23°C to impart7B-font characters arranged in three lines each composed of 19 characters. The pattern of the characters imparted by the embossing was "123···90123···789". The card which had been embossed was placed on a flat plate, and the height from the surface of the flat plate to the location of the highest part of the non-embossed surface of the card was measured. This height was taken as a value of embossing curl. In accordance with JIS-X6301 (1998), the samples which had an embossing curl of 2.5 mm or less were rated as "O", and the samples which had an embossing curl exceeding 2.5 mm were rated as " × ".

(7) Embossability (Embossing Height)

The card which had been embossed in (6) was placed on a flat plate, and the embossing height, which was the height from the non-embossed area to the tops of the characters imparted by the embossing, was measured. In accordance with JIS-X6302 (1998), the samples which had an embossing height in the range of 0.4-0.48 mm were rated as "○", and the samples which had an embossing height less than 0.4 mm were rated as "×".

(8) Interlaminar Bondability

When the card base sample was produced, a portion where thermal fusion bonding by pressing did not occur was caused to remain beforehand. Thus, test pieces each including both a portion where the layers had been thermally fusion bonded and the portion where thermal fusion bonding had not occurred were produced. These test pieces were subjected to a 180° peel test for examining adhesion between an overlay sheet and a core sheet in accordance with JIS-K6854-2 (1999). The samples which underwent no peeling at all or in which the card base broke when the sheets were being peeled were rated as " O ", and the samples in which the sheets were peeled off without causing card base breakage were rated as "×".

(9) Plant Utilization

Of the cards produced, the cards in which a plant-derived raw material had been used for both the overlay layers and the core layers were rated as "○", and the cards in which a plant-derived raw material had been used for either were rated as "△".

[Table 2]

| | | Example 1 | | Example 2 | | Example 3 | | Comparative Example 1 | | Comparative Example 2 | |
|---|---|---|---|---|---|---|---|---|---|---|---|
| Overlay layer | | A-1 | | A-2 | | A-1 | | PC | | PLA | |
| Core layer | | A-Core | | A-Core | | PLA-Core | | PLA-Core | | PLA-Core | |
| Punchability | number of troubles | 0 | ○ | 1 | ○ | 1 | ○ | 9 | × | 10 | × |
| Embossing curl | mm | 2.1 | ○ | 2.0 | ○ | 2.2 | ○ | 4.1 | × | crack | × |
| Embossing height | mm | 0.47 | ○ | 0.47 | ○ | 0.46 | ○ | 0.44 | ○ | crack | × |
| Interlaminar bondability | peeling | not occurred | ○ | not occurred | ○ | not occurred | ○ | not occurred | ○ | not occurred | ○ |
| Plant utilization | layer containing plant-derived resin | both layers | ○ | both layers | ○ | both layers | ○ | core layer | △ | both layers | ○ |

It can be seen from Table 1 and Table 2 that the card configurations of Examples 1 to 3, in which sheets for cards of the invention were used, each were excellent in terms of all of heat resistance, weatherability, rigidity, punchability, and embossability and attained a high degree of plant utilization.

On the other hand, the card configuration of Comparative Example 1 was poor in punchability and embossing curl. In addition, the overlay layers were poor in weatherability and employed no plant-derived raw material. The card configuration of Comparative Example 2 had poor punchability and was extremely difficult to emboss, and the heat resistance thereof was also insufficient.

[Examples of the Second Embodiment]

The following materials were used as overlay sheets for cards according to the invention.

(C-1) A film having a thickness of 100 μm formed through melt extrusion from a polycarbonate resin (glass transition temperature: 127°C) obtained by copolymerizing isosorbide and polyethylene glycol (molecular weight, 400) in a molar ratio of 97:3.

(C-2) A film having a thickness of 100 μm formed through melt extrusion from a polycarbonate resin (glass transition temperature: 106°C) obtained by copolymerizing isosorbide and polyethylene glycol (molecular weight, 400) in a molar ratio of 93:7.

(C-3) A film obtained by dry-blending 40% by mass amorphous poly(lactic acid) resin (trade name "Ingeo 4060D", manufactured by Nature Works LLC; glass transition temperature, 55°C) with 60% by mass crystalline poly(lactic acid) resin (trade name "Ingeo 4032D", manufactured by Nature Works LLC; glass transition temperature, 55°C) and forming the blend into a film having a thickness of 100 μm by melt extrusion.

(C-4) A film having a thickness of 100 μm formed through melt extrusion from an aromatic polycarbonate resin ("Novarex 7022", manufactured by Mitsubishi Engineering-Plastics Corp.).

The following materials were used as core sheets for cards according to the invention.

(D-1) A film obtained by dry-blending 100% by mass polycarbonate resin (glass transition temperature, 101°C) obtained by copolymerizing isosorbide and 1,4-cyclohexanedimethanol in a molar ratio of 50:50 with 10% by mass rutile-form titanium oxide ("KRONOS 2230", manufactured by KRONOS, Inc.) and forming the blend into a film having a thickness of 150 μm by melt extrusion.

(D-2) A film obtained by dry-blending 100% by mass the resins used in C-3 with 10% by mass the titanium oxide used in D-1 and forming the blend into a film having a thickness of 150 μm by melt extrusion.

An ink based on a vinyl chloride/vinyl acetate copolymer was used to form a hiding printed layer, by screen printing, on one surface of each core sheet. Two layers of the core sheet were stacked so that the hiding printed layers faced outward. Furthermore, as shown in Table 3, the stacked layers of the core sheet were sandwiched from both sides between two layers of an overlay sheet, and this stack was wholly sandwiched between chrome-plated plates, pressed at an areal sheet pressure of $9.8 \times 10^5$ Pa at 130°C for 10 minutes, and then cooled to room temperature. The resultant laminate was taken out. Thus, a card base sample was obtained.

(Tests and Evaluation)

1) Heat Resistance

In accordance with JIS-X6310 (1996), which is standards for credit cards with a magnetic stripe, a card was immersed in 60°C hot water for 5 minutes and then examined for surface change and contraction. In addition, the same test was conducted at 80°C. The samples in which neither a surface change nor contraction was observed at each temperature were rated as " O ", and the samples in which a surface change or contraction was observed at at least either of the temperatures were rated as " × ".

2) Impact Resistance

In accordance with JIS-X6310 (1996), which is standards for credit cards with a magnetic stripe, impact strength was measured. Specifically, a card was placed on a rigid and strong horizontal plate, and a 500-g steel ball was caused to freely fall thereonto from a height of 30 cm. Thereafter, the card was examined for crack and craze. The samples in which neither a crack nor a craze was observed were rated as " O ", and the samples in which a crack or a craze was observed were rated as "×".

3) Embossing Curl

A card shape was punched out of the card base sample. Thereafter, the card was embossed using an embossing encoder DC9000 (manufactured by Datacard Japan Ltd.) at 23°C to impart7B-font characters arranged in three lines each composed of 19 characters. The pattern of the characters imparted by the embossing was "123···90123···789". The card which had been embossed was placed on a flat plate, and the height from the surface of the flat plate to the location of the highest part of the non-embossed surface of the card was measured. This height was taken as a value of embossing curl. In accordance with JIS-X6301 (1998), the samples which had an embossing curl of 2.5 mm or less were rated as acceptable.

4) Embossability (Embossing Height)

The card which had been embossed was placed on a flat plate, and the embossing height, which was the height from the non-embossed area to the tops of the characters imparted by the embossing, was measured. In accordance with JIS-X6302 (1998), the samples which had an embossing height in the range of 0.4-0.48 mm were rated as acceptable.

5) Interlaminar Adhesion

An incision was made between sheet layers of a card, and the sheet layers were peeled from each other. The samples in which no peeling occurred except for the incised part or in which the card broke at the incised part were rated as "○", the samples in which brittle peeling occurred were rated as "△", and the samples in which the bonded surfaces readily peeled off were rated as "×".

6) Weatherability (Color Difference)

Using Eye Super UV Tester SUV-W151, manufactured by Iwasaki Electric Co., Ltd., as a tester, UV was irradiated upon each overlay sheet as a sample under the conditions of a UV irradiation intensity of 75 mW/cm$^2$, an irradiation temperature of 63°C, and an irradiation humidity of 50%. The YI value (yellowness) of the sample was measured before UV irradiation and after 50-hour UV irradiation using a spectrometric colorimeter ("SC-T", manufactured by Suga Test Instruments Co., Ltd.) in accordance with JIS-K7103 (1977). The color difference ΔYI, which is the difference between before and after the test, was calculated. The samples which had a ΔYI value of 0 or larger but less than 1.0 were rated as "○", and the samples which had a ΔYI value of 1.0 or larger were rated as "×".

7) Plant Utilization

With respect to each card produced, the layers for which a plant-derived resin had been used were shown.

[Table 3]

| | Example 4 | Example 5 | Example 6 | Comparative Example 3 | Comparative Example 4 |
|---|---|---|---|---|---|
| Overlay layer | C-1 | C-2 | C-1 | C-3 | C-4 |
| Core layer | D-1 | D-1 | D-2 | D-2 | D-2 |
| Heat resistance | ○ | ○ | ○ | × | ○ |
| Impact resistance | ○ | ○ | ○ | × | ○ |
| Embossing curl [mm] | 2.0 | 1.9 | 2.5 | crack | 4.1 |
| Embossing height [mm] | 0.47 | 0.47 | 0.46 | crack | 0.44 |
| Interlaminar adhesion | ○ | ○ | ○ | ○ | ○ |
| Weatherability | ○ | ○ | ○ | ○ | × |
| Plant utilization | both layers | both layers | both layers | both layers | core layer |

As apparent from Table 3, the cards of Examples 4 to 6 had a high proportion of plant-derived resin and satisfied all of heat resistance, impact resistance, embossability, interlaminar adhesion, and overlay sheet weatherability. On the other hand, the cards of Comparative Examples 3 and 4 were inferior to the Examples in any of heat resistance, impact

resistance, embossability, interlaminar adhesion, and overlay sheet weatherability.

This application is based on a Japanese patent application filed on May 19, 2010 (Application No. 2010-115665) and a Japanese patent application filed on July 9, 2010 (Application No. 2010-156831).

## Claims

1. A card produced by using a sheet for cards which has a layer constituted of a resin composition (X) containing, as a main component, a polycarbonate resin (A) that contains structural units (a) derived from a dihydroxy compound represented by the following formula (1) and that has a glass transition temperature of 90°C or higher and lower than 130°C, determined via the examination of the temperature dispersion of dynamic viscoelasticity under the conditions of a strain of 0.1%, a frequency of 10 Hz and a heating rate of 3 °C/min in accordance with JIS-K7198 Method A (1991), in which card the sheet for cards is applied as a core sheet and as an overlay sheet, or in which the sheet for cards is applied as an overlay sheet and a lactic acid polymer is applied as a core sheet.

[Chem. 1]

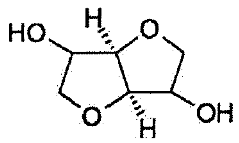

(1)

2. The card according to claim 1 wherein the polycarbonate resin (A) further contains structural units (b) derived from a cyclohexanedimethanol.

3. The card according to claim 2 wherein the polycarbonate resin (A) contains the structural units (b) in a proportion of 45-65% by mole based on all structural units each derived from a dihydroxy compound.

4. The card according to claim 1 wherein the polycarbonate resin (A) contains the structural units (a) in a proportion of 80-99% by mole based on all structural units each derived from a dihydroxy compound and has a glass transition temperature of 90°C or higher but lower than 130°C.

5. The card according to any one of claims 1 to 4 wherein the resin composition (X) further contains an ultraviolet absorber.

6. The card according to any one of claims 1 to 5 wherein the resin composition (X) further contains an inorganic filler.

7. The card according to any one of claims 1 to 6 wherein the sheet for cards is an overlay sheet in which at least one surface thereof has been matted so that the surface has a 10-point average roughness of 3-30 μm, determined as defined in the description.

8. The card according to any one of claims 1 to 6 wherein the sheet for cards is a core sheet and in which the resin composition (X) contains a colorant.

9. The card according to any one of claims 1 to 8 wherein the sheet for cards has a flexural modulus, of 2,200-3,000 MPa, calculated with formula (1)

$$\text{Flexural modulus (Pa)} = 2\times0.01\times F/(d^3\times9.8) \qquad \text{(I)}$$

wherein F is the flexural rigidity in g·cm determined as defined in the description and d is the thickness of the test piece in cm.

10. The card according to any one of claims 1 to 9 which is a magnetic stripe card produced further using a magnetic tape.

11. The card according to any one of claims 1 to 9 which is an IC card produced further using an IC chip.

12. The card according to any one of claims 1 to 11 which, when being embossed at 23°C, comes to have an embossing curl of 2.5 mm or less determined as defined in the description.

## Patentansprüche

1. Eine Karte, hergestellt unter Verwendung einer Folie für Karten, die eine Schicht aufweist, welche aus einer Harzzusammensetzung (X) gebildet ist, die als einen Hauptbestandteil ein Polycarbonatharz (A) enthält, welches Struktureinheiten (a) enthält, die von einer durch die folgende Formel (1) dargestellte Dihydroxyverbindung abgeleitet sind und das eine Glasübergangstemperatur von 90°C oder höher und niedriger als 130°C aufweist, bestimmt über die Untersuchung der Temperaturdispersion der dynamischen Viskoelastizität unter den Bedingungen einer Dehnung von 0,1%, einer Frequenz von 10 Hz und einer Erwärmungsrate von 3°C/min gemäß JIS-K7198 Verfahren A (1991),
wobei die Folie für Karten als eine Kernfolie und als eine Überzugsfolie aufgebracht ist oder wobei die Folie für Karten als eine Überzugsfolie aufgebracht ist und ein Milchsäurepolymer als eine Kernfolie aufgebracht ist.

[Chem. 1]

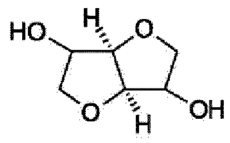

(1)

2. Die Karte nach Anspruch 1, wobei das Polycarbonatharz (A) weiter Struktureinheiten (b) enthält, die von einem Cyclohexandimethanol abgeleitet sind.

3. Die Karte nach Anspruch 2, wobei das Polycarbonatharz (A) die Struktureinheiten (b) in einem Anteil von 45-65 mol-%, bezogen auf alle Struktureinheiten, die jeweils von einer Dihydroxyverbindung abgeleitet sind, enthält.

4. Die Karte nach Anspruch 1, wobei das Polycarbonatharz (A) die Struktureinheiten (a) in einem Anteil von 80-99 mol-%, bezogen auf alle Struktureinheiten, die jeweils von einer Dihydroxyverbindung abgeleitet sind, enthält und eine Glasübergangstemperatur von 90°C oder höher, jedoch niedriger als 130°C aufweist.

5. Die Karte nach einem der Ansprüche 1 bis 4, wobei die Harzzusammensetzung (X) weiter einen Ultraviolettabsorber enthält.

6. Die Karte nach einem der Ansprüche 1 bis 5, wobei die Harzzusammensetzung (X) weiter einen anorganischen Füllstoff enthält.

7. Die Karte nach einem der Ansprüche 1 bis 6, wobei die Folie für Karten eine Überzugsfolie ist, wobei mindestens eine Oberfläche derselben mattiert wurde, so dass die Oberfläche eine 10-Punkt-Mittenrauheit von 3-30 μm, bestimmt wie in der Beschreibung definiert, aufweist.

8. Die Karte nach einem der Ansprüche 1 bis 6, wobei die Folie für Karten eine Kernfolie ist und wobei die Harzzusammensetzung (X) ein Färbemittel enthält.

9. Die Karte nach einem der Ansprüche 1 bis 8, wobei die Folie für Karten ein Biegemodul von 2.200-3.000 MPa, berechnet mit Formel (I), aufweist

$$\text{Biegemodul (Pa)} = 2 \times 0{,}01 \times F/(d^3 \times 9{,}8) \quad (I)$$

wobei F die Biegesteifigkeit in g · cm, bestimmt wie in der Beschreibung definiert, ist und d die Dicke des Prüfstücks in cm ist.

10. Die Karte nach einem der Ansprüche 1 bis 9, bei welcher es sich um eine Magnetstreifenkarte handelt, die weiter

unter Verwendung eines Magnetbandes hergestellt wird.

**11.** Die Karte nach einem der Ansprüche 1 bis 9, bei welcher es sich um eine IC-Karte handelt, die weiter unter Verwendung eines IC-Chips hergestellt wird.

**12.** Die Karte nach einem der Ansprüche 1 bis 11, welche, wenn sie bei 23°C geprägt wird, eine Prägungsrollneigung von 2,5 mm oder weniger, bestimmt wie in der Beschreibung definiert, aufweist.

## Revendications

**1.** Carte produite par utilisation d'une feuille pour cartes qui a une couche constituée d'une composition de résine (X) contenant, en tant que composant principal, une résine de polycarbonate (A) qui contient des motifs structurels (a) dérivés d'un composé dihydroxy représenté par la formule (1) qui suit et qui a une température de transition vitreuse de 90 °C ou plus et inférieure à 130 °C, déterminée par examen de la dispersion en température de la viscoélasticité dynamique dans des conditions de déformation de 0,1 %, de fréquence de 10 Hz et de vitesse de montée en température de 3 °C/min conformément à la norme JIS-K7198 Méthode A (1991),
carte dans laquelle la feuille pour cartes est appliquée en tant que feuille de coeur et en tant que feuille de recouvrement, ou dans laquelle la feuille pour cartes est appliquée en tant que feuille de recouvrement et un polymère d'acide lactique est appliqué en tant que feuille de coeur :

[formule chimique 1]

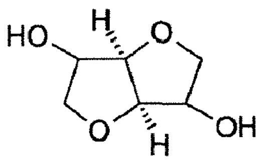

(1)

**2.** Carte selon la revendication 1, dans laquelle la résine de polycarbonate (A) contient en outre des motifs structurels (b) dérivés d'un cyclohexanediméthanol.

**3.** Carte selon la revendication 2, dans laquelle la résine de polycarbonate (A) contient les motifs structurels (b) en une proportion de 45 à 65 % en moles par rapport à tous les motifs structurels dérivés chacun d'un composé dihydroxy.

**4.** Carte selon la revendication 1, dans laquelle la résine de polycarbonate (A) contient les motifs structurels (a) en une proportion de 80 à 99 % en moles par rapport à tous les motifs structurels dérivés chacun d'un composé dihydroxy et a une température de transition vitreuse de 90 °C ou plus mais inférieure à 130 °C.

**5.** Carte selon l'une quelconque des revendications 1 à 4, dans laquelle la composition de résine (X) contient en outre un agent absorbant les ultraviolets.

**6.** Carte selon l'une quelconque des revendications 1 à 5, dans laquelle la composition de résine (X) contient en outre une charge inorganique.

**7.** Carte selon l'une quelconque des revendications 1 à 6, dans laquelle la feuille pour cartes est une feuille de recouvrement dans laquelle au moins une surface de celle-ci a été matifiée de façon que la surface ait une rugosité moyenne en 10 points de 3 à 30 μm, déterminée comme défini dans la description.

**8.** Carte selon l'une quelconque des revendications 1 à 6, dans laquelle la feuille pour cartes est une feuille de coeur et dans laquelle la composition de résine (X) contient un colorant.

**9.** Carte selon l'une quelconque des revendications 1 à 8, dans laquelle la feuille pour cartes a un module de flexion de 2 200 à 3 000 MPa, calculé grâce à la formule (I)

$$\text{module de flexion (Pa)} = 2 \times 0{,}01 \times F/(d^3 \times 9{,}8) \qquad (I)$$

dans laquelle F est la rigidité à la flexion en g•cm déterminé comme défini dans la description et d est l'épaisseur de l'éprouvette en cm.

**10.** Carte selon l'une quelconque des revendications 1 à 9, qui est une carte magnétique produite par utilisation en outre d'une bande magnétique.

**11.** Carte selon l'une quelconque des revendications 1 à 9, qui est une carte à puce produite par utilisation en outre d'une puce à circuit intégré.

**12.** Carte selon l'une quelconque des revendications 1 à 11 qui, lorsqu'elle est emboutie à 23 °C, en vient à avoir un gondolage par emboutissage de 2,5 mm ou moins, déterminé comme défini dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002036765 A
- JP 2002249652 A
- JP 2000141955 A
- JP 2009235172 A
- JP 2009040052 A
- JP 3628256 B
- JP 2003154606 A
- WO 2004111106 A
- WO 2007148604 A
- JP 2010115665 A
- JP 2010156831 A